# EUROPEAN PATENT APPLICATION

(11) **EP 2 375 598 A1**
(43) Date of publication of application: **12.10.2011**
(21) Application number: 10382077.5
(22) Date of filing: 06.04.2010
(51) Int. Cl.: H04H 20/12, H04N 17/00

(54) **Headends programmer implemented in a digital field strenght meter**

(71) Applicant: BCN Distribuciones, S.A., 08210 Barbera del Valles (ES)
(72) Inventor: Prêcheur, Hervé, 08210, BARBERÀ DEL VALLÈS (ES)
(74) Representative: Manresa Val, Manuel

(57) **Abstract**

A headends programmer implemented in a digital field-strength meter.

It comprises equipment power supply means, characterised in that it comprises at least one programmer and at least one field-strength meter, with the programmer implemented in the meter forming a single piece of equipment.

## Description

A headends programmer implemented in a digital field-strength meter of the type comprising equipment power supply means characterised in that it comprises at least one programmer and at least one field-strength meter, with the programmer implemented in the meter forming a single piece of equipment.

### BACKGROUND OF THE INVENTION

The separate use of headends programmers and field-strength meters is known in the state of the art for digital television signal processing equipment, without any interaction between them.

In fact, it is usual for programmer manufacturers not to produce field-strength meters and vice versa, because they are different technologies.

The separate use of both devices can cause significant drawbacks for engineers, which are listed below:

First, when the programmer is connected to the module, the available screen is very small are seven-segment or characters screens, which requires having the manual at hand all the time in order to establish the meaning of each codes appearing on the screen.

Second, the times employed in programming are very long. This is because each programmer has to individually program each module in individually way, so that after initiating programming, it is necessary to wait for the module to be finished in order to disconnect the cable and reconnect it to another module. This waiting time has to be multiplied by the number of modules to be programmed, also including the programmer initiation time and for communication with the module before commencing the programming. This means that each module is independent in the time in which it is programmed. Similarly, this means that the more modules that are connected to the programming equipment, the greater the complexity or the greater the time spent in programming them.

Lastly, when a module is programmed, there is always doubt as to whether module output signal is correct and if whether the values are those previously assigned. It is currently necessary to use the programmer first and then the field-strength meter to check values and operator following with correcting the programmer values in order to return to testing if the output signal is correct, which, on occasions is a great loss of time and money as the user has to manually enter and verify the data on the programmer, first and then on the field-strength meter.

This application is intended to improve and resolve all the previous drawbacks.

The above problems are resolved by configuring a programmer in a field-strength meter, thus producing a single piece of test equipment.

As previously stated, there are two different technologies, requiring different manufacturers and technical developments, meaning that programmer manufacturers do not produce field-strength meters and vice versa, because the working environments are not designed for this.

Thus, with the screen provided by the meter, which is large, the entire programming process can be very easily displayed and performed because the programmer implemented in the field strength meter takes advantage of the fact that the meter power is much greater than that of the programmer by itself and being able to make use of this greater power in benefit of the already implement programmer so that the performance of the latter is enhanced. This involves benefits for the operator because it facilitates his job or programming and also for the manufacturer, because eliminates the costs deriving from the programmer.

The matter of module connection is also improved. The inventor intends to reduce programming times. To this end, all modules are connected together with an output connecting to the meter-programmer. In this way, it is no longer necessary to one output per module or to continually disconnect the cable from one module and connect it to another. In this case, the implemented programmer makes use of the field-strength meter microprocessor power to carry out these processes, because the meter microprocessor is much more powerful than that in a state-of-the-art programmer, so that the referred meter microprocessor is able to perform the actual operations of the field-strength meter. This involves significant savings in the programmer microprocessor because it is no longer necessary. In this way, all the modules can be identified all at once, without any need to disconnect the meter-programmer, thus reducing headends programming times. In other words, there is considerable material savings and technological advance.

In relation to last indicated problem, the fact of having an integrated programmer and field-strength meter system means that the same parameters used to programme the module are used to measure the generated output signal so that the user sees the programming data and actual measurements of the generated signals and is thus able to perform onsite real-time modifications. This will minimise programming errors and, at the same time, contribute a high level of security to the installer or user.

An object of this invention is a headends programmer implemented in a digital field-strength meter of the type comprising equipment power supply means characterised in that it comprises at least one programmer and at least one field-strength meter, with the programmer implemented in the meter forming a single piece of equipment.

### SPECIFIC EMBODIMENT OF THIS INVENTION

The headends programmer implemented in a digital field-strength meter basically comprises equipment power supply means that could be a connection to a mains socket or batteries and is made up of a programmer and at least one field strength meter interconnected to form a single piece of equipment. It can also include a keypad for data entry, a USB port for storage or data downloading (such as firmware updating).

Although, for better understanding in the description, the programmer is conceptually separate from the meter, this might give the impression that they are two different devices, both are implemented to form a single piece of equipment that includes a programmer and a field-strength meter, thus taking advantage of the meter characteristics and employ it as a programmer as well as for the actual meter functions.

This equipment also includes at least one serial port output and, although in this embodiment only one output is incorporated, a second or third output could be added for installations with a considerable number of modules.

This output connects the programmer to the mentioned modules. In turn, the modules are connected together, thus identifying the programmer to each module with the programmer remaining connected at all times while all the modules are identified.

This means that within milliseconds, the programmer transmits a signal that is received by each module that responds to the same and which can be repeated a second or third time in milliseconds if the user deems it necessary if there is a faulty module.

The provided parameters are presented to the user via the screen, in this case, TFT measuring five inches, for example (although it could be larger or smaller), with two screens being possible, one for the programmer and the other for the meter readings or a single screen shared by the programmer and the meter by means of marks or areas presenting different information, for example, one referring to the programming and the other to the measured signal.

The same parameters programmed for the module are used to make the generated signal measurement. In other words, in the case of employing a single screen with two marks or zones, the user can display the module input data in one of the zones and output data in the other to check whether they are the expected or correct values. Or put in a different way, whether the programming data and the actual generated signal measurements are the expected ones, being able to correct the same without any need to disconnect the programmer or field strength meter as currently occurs in the state of the art. Said correction may be performed automatically without any user intervention.

This invention patent describes a new headends programmer implemented in a digital field-strength meter. The examples mentioned here do not limit this invention and thus may have various applications and/or adaptations, all of which are within the scope of the following claims.

## Claims

1. A headends programmer implemented in a digital field-strength meter of the type comprising equipment power supply means **characterised in that** it comprises at least one programmer and at least one field-strength meter, with the programmer implemented in the meter forming a single piece of equipment.

2. A programmer in accordance with claim 1 **characterised in that** it comprises at least one output that connects the programmer to modules that, in turn, are interconnected, with the programmer identifying each of the modules, with the programmer remaining connected at all times while all the modules are identified.

3. A programmer in accordance with claim 2 **characterised in that** the same parameters used to program the module are used to measure the generated signal.

4. A programmer in accordance with claim 1 **characterised in that** it comprises at least one screen shared between the programmer and the field strength meter.

5. A programmer in accordance with claim 1 or 4 **characterised in that** the screen is TFT.

6. A programmer in accordance with claim 4 or 5 **characterised in that** the screen is at least five inches.

7. A programmer in accordance with claim 4 or 5 **characterised in that** the screen is less than five inches.

8. A programmer in accordance with at least one of the previous claims **characterised in that** the mentioned screen is used to display the programming data and the actual generated signal measurements, adjusting these data to the predetermined values automatically.
